# EUROPÄISCHE PATENTANMELDUNG

(11) **EP 0 957 427 A2**
(43) Veröffentlichungstag der Anmeldung: **17.11.1999**
(21) Anmeldenummer: 99108884.0
(22) Anmeldetag: 05.05.1999
(51) Int. Cl.: G06F 3/16

(54) **Diktiersystem**

(30) Priorität: 09.05.1998 DE 19820814
(71) Anmelder: GRUNDIG Aktiengesellschaft, 90762 Fürth (DE)
(72) Erfinder: Zhu, Ming Dr., 90762 Fürth (DE); Carl, Holger Dr., 90762 Fürth (DE); Müller, Rudolf, 90762 Fürth (DE); Rettig, Jürgen, 90762 Fürth (DE)

(57) **Zusammenfassung**

Die Erfindung betrifft ein Diktiersystem mit einer Mikrophoneinheit und einem mit der Mikrophoneinheit verbundenen Computer. Der Computer ist mit einer Spracherkennungssoftware versehen, um aus eingegebenen Sprachsignalen Textsignale zu generieren. Der Computer weist einen Textsignalspeicher auf, der zur Abspeicherung von den Textsignalen entsprechenden Daten vorgesehen ist. Die Mikrophoneinheit weist Bedienungselemente auf, durch deren Betätigung textsignalbezogene Sprünge im Textsignatspeicher auslösbar sind, welche wortweise, satzweise, absatzweise oder diktatweise erfolgen können.

## Beschreibung

Die Erfindung betrifft ein Diktiersystem mit den im Oberbegriff des Anspruchs 1 angegebenen Merkmalen.

Es ist bereits ein Handdiktiergerät der Fa. Philips mit der Bezeichnung 390 POCKET MEMO bekannt, welches einen Schiebeschalter aufweist, mittels dessen das Band einer eingelegten Diktiergeräte-Kassette in Vorwärts- oder in Rückwärtsrichtung gespult werden kann. Der Umfang der Bandbewegung bzw. die Dauer des Umspulens wird dabei durch die Dauer der Verschiebung des Schiebeschalters bestimmt.

Weiterhin sind bereits Diktiergeräte bekannt, die eine Unterbrechungs- bzw. Kurzrücklauftaste aufweisen, bei deren Betätigung innerhalb eines bereits diktierten Textes ein Rücksprung um ein vorgegebenes Diktierzeitintervall erfolgt.

Aus der EP-A1-0 337 086 der Anmelderin ist es bereits bekannt, einen Rechner, insbesondere einen Personal Computer, wie ein normales Diktiergerät benutzen zu können. Zu diesem Zweck weist der Rechner eine Codierschaltung auf, mittels derer Steuerbefehle, die über die Bedientasten eines Diktiergerätemikrophons eingegeben werden, in Maschinenworte umgesetzt werden. Der Rechner löst in Ansprache auf diese Maschinenworte in seinem Schreib-Lese-Speicher, bei dem es sich um eine Diskette oder um die Festplatte handeln kann, Schreib-, Lese-, Lösch-, Korrigier- oder Markiervorgänge aus oder beendet diese.

In der nicht vorveröffentlichten Patentanmeldung DE 198 08 470 der Anmelderin ist ein Diktiergerät beschrieben, welches ein Diktiergerätegehäuse aufweist, in welchem ein Mikrophon, ein Lautsprecher und eine Aufzeichnungs-/Wiedergabe-Signalverarbeitungsschaltung vorgesehen sind. Das Diktiergerätegehäuse ist mit einer Kopfhörer-Ausgangsbuchse versehen, an welcher während des Wiedergabevorganges von auf einem Signalspeichermedium aufgezeichneten Signalen Ausgangssignale zur Verfügung gestellt werden. Weiterhin ist das Diktiergerätegehäuse mit einer weiteren Anschlußbuchse versehen, an welcher in einer ersten Betriebsart vom Mikrophon des Diktiergerätes abgeleitete Signale und in einer zweiten Betriebsart vom Signalspeichermedium abgeleitete Signale zur Verfügung gestellt werden. Ein derartiges Diktiergerät ist beispielsweise als Signalquelle für einen Sprache-Text-Umsetzer verwendbar. Zwischen dem Diktiergerät und dem Sprache-Text-Umsetzer kann eine bidirektionale Übertragung erfolgen.

Weiterhin ist aus der WO94/20899 ein Handgerät zur Eingabe von Sprachsignalen in einen Computer bekannt. Der Computer ist mit einer Spracherkennungssoftware zur Umwandlung von Sprache in Text versehen. Die im Computer erzeugten Textsignale werden auf dem Bildschirm des Computers angezeigt und können unter Verwendung des Handgerätes korrigiert und ergänzt werden. Um eine derartige Korrektur oder Ergänzung durchzuführen, wird eine gewünschte Textstelle auf dem Bildschirm mittels eines Cursors markiert. Dies erfolgt unter Verwendung von Cursorsteuermitteln, die am Handgerät vorgesehen sind. Weiterhin weist das Handgerät auch Funktionstasten auf, mittels derer auf dem Bildschirm dargestellte Textstellen markiert und die markierten Textstellen verschoben, kopiert oder gelöscht werden können. Ein Benutzer kann folglich mittels ein und desselben Handgerätes Diktate in den Computer eingeben, einen Cursor auf dem Computer-Bildschirm verschieben und Textmanipulationen vornehmen.

Ausgehend von diesem Stand der Technik liegt der Erfindung die Aufgabe zugrunde, die Funktionalität des bekannten Systems zu verbessern.

Diese Aufgabe wird durch ein System mit den im Anspruch 1 angegebenen Merkmalen gelöst. Vorteilhafte Ausgestaltungen und Weiterbildungen des im Anspruch 1 angegebenen Systems sind Gegenstand der Ansprüche 2 bis 10.

Die Vorteile der Erfindung bestehen insbesondere darin, daß der Benutzer des Systems sich innerhalb eines bereits diktierten Textes textbezogen bewegen kann. Diese textbezogene Bewegung kann sowohl in Vorwärts- als auch in Rückwärtsrichtung erfolgen. Sie kann insbesondere wortweise, satzweise oder absatzweise erfolgen, wobei der Benutzer die jeweils gewünschte Bewegungsrichtung und den jeweils gewünschten Bewegungsumfang schnell und einfach mittels der Mikrophoneinheit des Systems vorgeben kann.

Wird das beanspruchte System beispielsweise als Diktiergerät benutzt, dann kann der Diktierende während des Diktats in einfacher Weise definierte textbezogene Rücksprünge im bereits diktierten Text vornehmen, um bereits diktierte Wörter, Satzteile oder ganze Sätze zu ändern oder auch um nach einer Unterbrechung eines Diktats den noch zu diktierenden Folgetext an das bereits Diktierte anpassen zu können.

Weitere vorteilhafte Eigenschaften der Erfindung ergeben sich aus der Erläuterung von Ausführungsbeispielen anhand der Figuren.

Es zeigt:
- FIG 1: ein erstes Ausführungsbeispiel für ein Diktier-system gemäß der Erfindung und
- FIG 2: ein zweites Ausführungsbeispiel für ein Diktier-system gemäß der Erfindung.

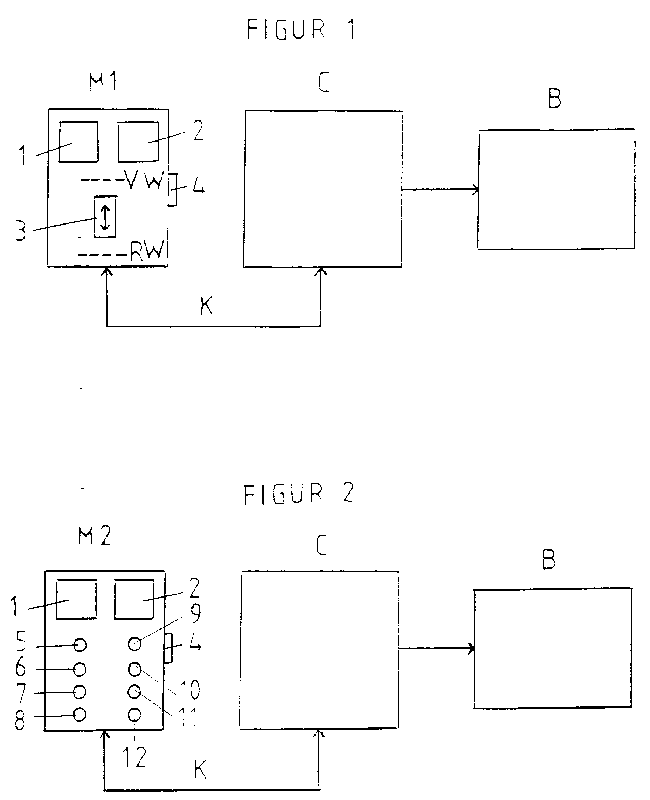

Die Figur 1 zeigt ein erstes Ausführungsbeispiel für ein Diktiersystem gemäß der Erfindung. Das System weist eine Mikrophoneinheit M1 und einen über ein Verbindungskabel K mit der Mikrophoneinheit verbundenen Computer C auf. An dem Computer C ist ein Bildschirm B angeschlossen.

Die Mikrophoneinheit M1 enthält ein Mikrophon 1, einen Lautsprecher 2, einen Schiebeschalter 3 und einen Start-/Stop-Knopf 4. Weiterhin kann die Mikrophoneinheit M1 auch weitere Funktionstasten aufweisen, die für das Verständnis der Erfindung nicht wesentlich sind und deshalb in der Figur nicht dargestellt sind.

Der Schiebeschalter der Mikrophoneinheit M1 ist in der Figur 1 in einer neutralen Mittelstellung gezeigt. Er ist jedoch in Richtung des in der Figur gezeigten Pfeiles nach oben in eine erste Endposition verschiebbar, die durch die gestrichelte und mit VW ("vorwärts") bezeichnete Linie angedeutet ist. Er ist weiterhin in Richtung des in der Figur gezeigten Pfeiles nach unten in eine zweite Endposition verschiebbar, die durch die gestrichelte und mit RW ("rückwärts") bezeichnete Linie angedeutet ist.

Der Computer C ist mit einer Spracherkennungssoftware versehen und deshalb in der Lage, aus vom Mikrophon 1 aufgenommenen Sprachsignalen, die mittels eines ebenfalls im Computer vorgesehenen A/D-Wandlers in digitale Signale umgesetzt wurden, Textsignale zu generieren, die in einem Textsignalspeicher des Computers als Datensignale abgespeichert werden. Diese Textsignale werden dem Bildschirm B zugeführt und dort in alphanumerischer Form angezeigt. Weiterhin werden mittels der Spracherkennungssoftware Informationen über den Wortanfang jedes einzelnen Wortes, über den Anfang eines neuen Satzes, über den Anfang eines neuen Absatzes und über den Anfang eines neuen Diktates gewonnen. Diese Informationen werden - wie unten noch erläutert wird - zur Durchführung von textsignalbezogenen Sprüngen im Diktat benötigt. Diese können unter Verwendung des Schiebeschalters 3 durchgeführt werden. Textsignalbezogene Sprünge im Sinne der Erfindung sind insbesondere Sprünge, aufgrund derer in einem bereits diktierten Text an den Anfang des letzten Wortes, den Anfang des letzten Satzes, den Anfang des letzten Absatzes, den Anfang des momentanen Diktates, den Anfang des nächsten Absatzes oder den Anfang des nächsten Diktates gesprungen werden kann.

Zu einem Sprung an den Anfang des letzten Wortes wird der Schiebeschalter 3 nach unten in die durch die gestrichelte Linie RW gekennzeichnete Endposition verschoben und dann sofort wieder losgelassen, wodurch der Schiebeschalter wieder automatisch seine neutrale Mittelposition einnimmt. Dieses kurzzeitge Verschieben wird dem Computer C über das Kabel K signalisiert. Dieser sucht in Ansprache auf den genannten Bedienbefehl im Textsignalspeicher nach dem Anfang des letzten Wortes und positioniert den auf dem Bildschirm im Textsignal dargestellten Cursor auf den Anfang dieses letzen Wortes. Weiterhin werden die aus dem Textsignalspeicher ausgelesenen, dem letzten Wort entsprechenden Daten in einem im Computer vorgesehenen D/A-Wandler in ein analoges Signal rückumgewandelt, über das Verbindungskabel K an die Mikrophoneinheit M1 zurückübertragen und von deren Lautsprecher 2 im Sinne einer Wiederholung des letzten Wortes abgestrahlt.

Zu einem Sprung an den Anfang des letzten Satzes wird der Schiebeschalter 3 nach unten in die durch die gestrichelte Linie RW gekennzeichnete Endposition verschoben und dort für eine bestimmte Zeitdauer t1 gehalten, die beispielsweise in einem Intervall zwischen 0,5 und 2 Sekunden liegt. Wird dann der Schiebeschalter 3 wieder losgelassen, nimmt er automatisch wieder seine neutrale Mittelposition ein. Dieses Verschieben des Schalters für die genannte Zeitdauer t1 wird dem Computer C über das Kabel K signalisiert. Dieser sucht in Ansprache auf den genannten Bedienbefehl im Textsignalspeicher nach dem Anfang des letzten Satzes und positioniert den auf dem Bildschirm im Textsignal dargestellten Cursor auf den Anfang dieses letzen Satzes. Weiterhin werden die aus dem Textsignalspeicher ausgelesenen, dem letzten Satz entsprechenden Daten in einem im Computer vorgesehenen D/A-Wandler in ein analoges Signal rückumgewandelt, über das Verbindungskabel K an die Mikrophoneinheit M1 zurückübertragen und von deren Lautsprecher 2 im Sinne einer Wiederholung des letzten Satzes abgestrahlt.

Zu einem Sprung an den Anfang des letzten Absatzes wird der Schiebeschalter 3 nach unten in die durch die gestrichelte Linie RW gekennzeichnete Endposition verschoben und dort für eine bestimmte Zeitdauer t2 gehalten, die beispielsweise in einem Intervall zwischen 2 und 4 Sekunden liegt. Wird dann der Schiebeschalter 3 wieder losgelassen, nimmt er automatisch wieder seine neutrale Mittelposition ein. Dieses Verschieben des Schalters für die genannte Zeitdauer t2 wird dem Computer C über das Kabel K signalisiert. Dieser sucht in Ansprache auf den genannten Bedienbefehl im Textsignalspeicher nach dem Anfang des letzten Absatzes und positioniert den auf dem Bildschirm im Textsignal dargestellten Cursor auf den Anfang dieses letzen Absatzes. Weiterhin werden die aus dem Textsignalspeicher ausgelesenen, dem letzten Absatz entsprechenden Daten in einem im Computer vorgesehenen D/A-Wandler in ein analoges Signal rückumgewandelt, über das Verbindungskabel K an die Mikrophoneinheit M1 zurückübertragen und von deren Lautsprecher 2 im Sinne einer Wiederholung des letzten Absatzes abgestrahlt.

Zu einem Sprung an den Anfang des momentanen Diktates wird der Schiebeschalter 3 nach unten in die durch die gestrichelte Linie RW gekennzeichnete Endposition verschoben und dort für eine bestimmte Zeitdauer t3 gehalten, die beispielsweise größer ist als 4 Sekunden. Wird dann der Schiebeschalter 3 wieder losgelassen, nimmt er automatisch wieder seine neutrale Mittelposition ein. Dieses Verschieben des Schalters für die genannte Zeitdauer t3 wird dem Computer C über das Kabel K signalisiert. Dieser sucht in Ansprache auf den genannten Bedienbefehl im Textsignalspeicher nach dem Anfang des momentanen Diktates und positioniert den auf dem Bildschirm im Textsignal dargestellten Cursor auf den Anfang des momentanen Diktates. Weiterhin werden die aus dem Textsignalspeicher ausgelesenen, dem momentanen Diktat entsprechenden Daten in einem im Computer vorgesehenen D/A-Wandler in ein analoges Signal rückumgewandelt, über das Verbindungskabel K an die Mikrophoneinheit M1 zurückübertragen und von deren Lautsprecher 2 im Sinne einer Wiederholung des momentanen Diktates abgestrahlt.

In entsprechender Weise wird zu einem Sprung an den Anfang des übernächsten Wortes, des nächsten Satzes, des nächsten Absatzes oder des nächsten Diktats der Schiebeschalter 3 nach oben in die durch die gestrichelte Linie VW gekennzeichnete Endposition verschoben und dann entweder sofort wieder losgelassen oder für die Dauer t1, t2 oder t3 gehalten. Daraufhin steuert der Computer eine entsprechende Verschiebung des Cursors auf dem Bildschirm und einen Sprung im Textsignalspeicher an die jeweils zutreffende Stelle. An dieser Textstelle kann der Benutzer dann beispielsweise Textergänzungen einbringen.

Abweichend vom vorstehend beschriebenen Ausführungsbeispiel ist die Erfindung auch bei ausgeschaltetem Bildschirm verwendbar, In diesem Fall wirkt die Erfindung im Sinne eines reinen Diktiergerätebetriebes, bei welchem textbezogene Sprünge in einem bereits diktiertem Text vorgenommen werden können.

Die Figur 2 zeigt ein zweites Ausführungsbeispiel für ein Diktiersystem gemäß der Erfindung. Bei diesem zweiten Ausführungsbeispiel ist im Vergleich zu dem in der Figur 1 gezeigten Ausführungsbeispiel lediglich die Mikrophoneinheit verändert.

Die in der Figur 2 dargestellte Mikrophoneinheit M2 enthält neben einem Mikrophon 1, einem Lautsprecher 2 und einem Start-/Stop-Knopf 4 Funktionstasten 5, 6, 7, 8, 9, 10, 11 und 12. Diese Funktionstasten ersetzen den beim Ausführungsbeispiel gemäß Figur 1 vorgesehenen Schiebeschalter. Mittels der Funktionstaste 5 ist ein Sprung an den Anfang des letzten Wortes und damit eine Wortwiederholung, mittels der Funktionstaste 6 ein Sprung an den Anfang des letzen Satzes und damit eine Satzwiederholung, mittels der Funktionstaste 7 ein Sprung an den Anfang des letzen Absatzes und damit eine Absatzwiederholung und mittels der Funktionstaste 8 ein Sprung an den Anfang des momentanen Diktates und damit eine Diktatwiederholung auslosbar.

Auf entsprechende Weise sind die Funktionstasten 9, 10, 11 und 12 zur Durchführung eines Sprunges an den Anfang des übernächsten Wortes, nächsten Satzes, nächsten Absatzes und nächsten Diktats vorgesehen.

Aus der vorstehenden Beschreibung der Erfindung ergibt sich, daß ein wesentlicher Vorteil der Erfindung in einer Erhöhung des Diktierkomforts liegt. Der Benutzer kann auf einfache und schnelle Weise in einer bereits erstellten Aufzeichnung punktgenau bestimmte vorgegebene Diktat-positionen anfahren bzw. aussuchen. Die Steuerung erfolgt nach Eingabe entsprechender Bedienbefehle durch den Computer anhand von im Rechner bekannten Wort-, Satz-, Absatz- und Diktatgrenzen.

Bei den oben beschriebenen Ausführungsbeispielen ist zwischen den Mikrophoneinheiten M1, M2 und dem Computer jeweils ein Verbindungskabel K zur Signalübertragung vorgesehen. Eine derartige Signalübertragung kann alternativ dazu auch drahtlos über eine HF- oder Infrarotübertragungsstrecke erfolgen.

## Patentansprüche

1. Diktiersystem mit einer Mikrophoneinheit und einem mit der Mikrophoneinheit verbundenen Computer, welcher mit einer Spracherkennungssoftware versehen ist, um aus eingegebenen Sprachsignalen Textsignale zu generieren, und welcher einen Textsignalspeicher aufweist, der zur Abspeicherung von den Textsignalen entsprechenden Daten vorgesehen ist,
**dadurch gekennzeichnet,**
daß die Mikrophoneinheit (M1, M2) ein Bedienungselement (3; 5, 6, 7, 8, 9, 10, 11, 12) aufweist, durch dessen Betätigung ein textsignalbezogener Sprung im Textsignalspeicher auslösbar ist.

2. Diktiersystem nach Anspruch 1,
**dadurch gekennzeichnet,**
daß der textsignalbezogene Sprung in Rückwärtsrichtung erfolgt.

3. Diktiersystem nach Anspruch 1,
**dadurch gekennzeichnet,**
daß der textsignalbezogene Sprung in Vorwärtsrichtung erfolgt.

4. Diktiersystem nach einem der vorhergehenden Ansprüche,
**dadurch gekennzeichnet,**
daß der Sprung wortweise erfolgt und/oder daß der Sprung satzweise erfolgt und/oder daß der Sprung absatzweise erfolgt und/oder daß der Sprung diktatweise erfolgt.

5. Diktiersystem nach einem der vorhergehenden Ansprüche,
**dadurch gekennzeichnet,**
daß die Mikrophoneinheit (M1) einen in zwei Verschiebungsrichtungen verschiebbaren Schiebeschalter (3) aufweist, eine Verschiebung des Schiebeschalters (3) in der ersten Verschiebungsrichtung einen Sprung in Rückwartsrichtung und eine Verschiebung des Schiebeschalters (3) in der zweiten Verschiebungsrichtung einen Sprung in Vorwärtsrichtung auslöst und die Sprungweite durch die Zeitdauer der Verschiebung des Schiebeschalters (3) bestimmt ist.

6. Diktiersystem nach einem der Ansprüche 1 bis 4,
**dadurch gekennzeichnet,**
daß die Mikrophoneinheit ein Bedienungselement aufweist, durch dessen Betätigung die Sprungrichtung veränderbar ist.

7. Diktiersystem nach einem der Ansprüche 1 bis 4 oder 6,
**dadurch gekennzeichnet,**
daß die Mikrophoneinheit (M2) mehrere Bedienungselemente (5, 6, 7, 8, 9, 10, 11, 12) aufweist und jedes dieser Bedienelemente einem Sprung vorgegebener Weite und Richtung zugeordnet ist.

8. Diktiersystem nach einem der vorhergehenden Ansprüche,
**dadurch gekennzeichnet,**
daß durch eine Betätigung eines Bedienelementes eine textsignalbezogene Mehrfachwiederholung eines Textsignalabschnittes auslösbar ist, wobei der Textsignalabschnitt ein Wort oder ein Satz ist.

9. Diktiersystem nach einem der vorhergehenden Ansprüche,
**dadurch gekennzeichnet,**
daß die Mikrophoneinheit einen Lautsprecher (2) aufweist und zwischen der Mikrophoneinheit und dem Computer (C) eine bidirektionale Signalübertragung erfolgt und/oder daß nach einer Betätigung des Bedienelementes über den Lautsprecher (2) Sprachsignale wiedergegeben werden, die aus dem Textsignalspeicher abgeleitet sind und/oder daß es einen mit dem Computer verbundenen Bildschirm (B) aufweist, auf welchem die Textsignale darstellbar sind.

10. Diktiersystem nach Anspruch 9,
**dadurch gekennzeichnet,**
daß unter Steuerung durch den Computer ein Cursor auf dem Bildschirm anzeigbar ist und die Position des Cursors bei einer Betätigung des Bedienelementes innerhalb des auf dem Bildschirm dargestellten Textes textsignalbezogen verändert wird.
